# EUROPEAN PATENT APPLICATION

(11) **EP 2 975 874 A1**
(43) Date of publication of application: **20.01.2016**
(21) Application number: 14177483.6
(22) Date of filing: 17.07.2014
(51) Int. Cl.: H04W 12/12

(54) **Method for preventing fraud or misuse based on a risk scoring approach when using a service of a service provider, system for preventing fraud or misuse, and mobile communication network for preventing fraud or misuse**

(71) Applicant: Deutsche Telekom AG, 53113 Bonn (DE)
(72) Inventor: Schenk, Volker, 53881 Euskirchen (DE); Wirths, Wolfgang, 53125 Bonn (DE); Haberkorn, Günter, 92263 Birgland/Schwend (DE); Wilhelm, Uwe-Georg, 53227 Bonn (DE)
(74) Representative: Schwöbel, Thilo K.

(57) **Abstract**

The invention relates to a method for preventing fraud or misuse based on a risk scoring approach when using a service of a service provider, wherein the service of the service provider is requested by a user equipment, the user equipment being connected to a mobile communication network and the user equipment comprising a subscriber identity module,
wherein a subscriber database is assigned to the mobile communication network, the subscriber database comprising information related to the user equipment and/or related to the subscriber identity module,
wherein for different occurrences of providing the service of the service provider with respect to the user equipment, the user of the user equipment is authenticated by means of transmitting an authentication information between the service provider and the user equipment, wherein for the purpose of the transmission of authentication information between the service provider and the user equipment, the user equipment is identified by means of the MSISDN (Mobile Station Integrated Services Digital Network number) of the user equipment,
wherein the method comprises the following steps:
-- in connection with a first occurrence of providing the service, the service provider transmits, in a first step, a request message to the subscriber database of the mobile communication network, the request message being related to the MSISDN of the user equipment, and the request message requesting additional data related to the user equipment and/or related to the subscriber identity module,
-- the subscriber database transmits, in a second step, subsequent to the first step, an answer message to the service provider, the answer message comprising the additional data related to the user equipment and/or related to the subscriber identity module,
-- in connection with a second occurrence of providing the service, the second occurrence of providing the service being either prior or subsequent to the first occurrence of providing the service, an authentication information is transmitted between the service provider and the user equipment without transmitting a request message and a corresponding answer message.

## Description

### BACKGROUND

The present invention relates to a method for preventing fraud or misuse based on a risk scoring approach when using a service of a service provider.

The present invention further relates to a system for preventing fraud or misuse based on a risk scoring approach.

Additionally, the invention relates to a mobile communication network for preventing fraud or misuse based on a risk scoring approach.

Furthermore, the invention relates to a program comprising a computer readable program code and to a computer program product.

Operators of mobile communication networks, especially public land mobile networks, can help prevent fraud or misuse in cases where such fraud or misuse is carried out using a user equipment connected to the mobile communication network.

However, the mobile network operator needs to avoid - especially in order to conform to national data protection measures - that pieces of information related to customers are treated and communicated in an inappropriate manner.

### SUMMARY

An object of the present invention is to provide cost effective solution for preventing fraud or misuse scenarios based on a risk scoring approach when using a service of a service provider, the service being requested by a user equipment connected to a mobile communication network.

The object of the present invention is achieved by a method for preventing fraud or misuse based on a risk scoring approach when using a service of a service provider, wherein the service of the service provider is requested by a user equipment, the user equipment being connected to a mobile communication network and the user equipment comprising a subscriber identity module,
wherein a subscriber database is assigned to the mobile communication network, the subscriber database comprising information related to the user equipment and/or related to the subscriber identity module,
wherein for different occurrences of providing the service of the service provider with respect to the user equipment, the user of the user equipment is authenticated by means of transmitting an authentication information between the service provider and the user equipment, wherein for the purpose of the transmission of authentication information between the service provider and the user equipment, the user equipment is identified by means of the MSISDN (Mobile Station Integrated Services Digital Network number) of the user equipment,
wherein the method comprises the following steps:
-- in connection with a first occurrence of providing the service, the service provider transmits, in a first step, a request message to the subscriber database of the mobile communication network, the request message being related to the MSISDN of the user equipment, and the request message requesting additional data related to the user equipment and/or related to the subscriber identity module,
-- the subscriber database transmits, in a second step, subsequent to the first step, an answer message to the service provider, the answer message comprising the additional data related to the user equipment and/or related to the subscriber identity module,
-- in connection with a second occurrence of providing the service, the second occurrence of providing the service being either prior or subsequent to the first occurrence of providing the service, an authentication information is transmitted between the service provider and the user equipment without transmitting a request message and a corresponding answer message.

According to the present invention, it is thereby advantageously possible that fraud or misuse can be effectively reduced by means of providing an answer message to the service provider, wherein the answer message comprises the additional data related to the user equipment and/or related to the subscriber identity module. From a point of view of the service provider, the mobile network operator of the mobile communication network can be considered a trusted entity that transmits - by means of the answer message comprising the additional data related to the user equipment and/or related to the subscriber identity module - auxiliary information that are related to the user equipment (i.e. to a subscriber of the service provider). The service provider (i.e. a third party or partner of the mobile communication network) is then able to use the additional data related to the user equipment and/or related to the subscriber identity module for providing value-added services. The service provider or third party may be a partner company of the mobile communication network or could also be another consumer (or subscriber) or a user group, e.g. a family member or a friend.

As an example, a bank (as a service provider) could use such additional information or data (related to the user equipment and/or related to the subscriber identity module) to enhance fraud detection mechanisms within the bank such that fraud schemes that have occurred (e.g. attacks against online banking systems by obtaining replacement subscriber identity modules (i.e. SIM cards or so-called multi-SIM cards, additional SIM cards for a post-paid contract) which enabled such fraudsters to eavesdrop on mobile transaction authentication numbers (TAN numbers)) can be either avoided or considerably reduced. Thus a request of the service provider for a transaction addressed to a SIM card that has been exchanged just recently can serve as an indicator of a higher fraud risk, and a requested transaction could be either refused or additional authentication required.

According to the present invention, any such data transmissions from the mobile network operator to service providers (or third parties) requires either an appropriate legal basis or some form of user consent of the user whose data is being transmitted. Therefore, according to the present invention, the additional data related to the user equipment and/or related to the subscriber identity module is preferably such that data reduction and data economy is applied.

According to a preferred embodiment of the present invention, the first occurrence of providing the service, including transmitting the request message and the answer message, is performed in case that - upon requesting the service by the user equipment - a risk scoring threshold of the service provider is exceeded.

It is thereby advantageously possible to limit requesting the additional data related to the user equipment and/or related to the subscriber identity module only to such cases where the risk scoring threshold of the service provider is exceeded. This allows to avoid the exchange of the request message and the answer message between the service provider and the subscriber database (i.e. the mobile network operator) in most of the normal cases and provides the possibility to nevertheless realize an enhanced level of fraud protection.

According to another preferred embodiment of the present invention, the information related to the user equipment and/or related to the subscriber identity module corresponds to at least one out of the following:
-- a time information related to a swap of the subscriber identity module,
-- a time information related to a change of the subscriber identity module,
-- a time information related to a generation of an analogous subscriber identity module (Multi-SIM card), related to the same MSISDN of the user equipment,
-- a time information related to a change of the user equipment,
-- a time information related to a change of the type of the user equipment,
-- a time information related to a change of the class of the user equipment,
-- a time information related to a change of the IMEI (International Mobile Equipment Identity).

According to the present invention, it is thereby advantageously possible for the service provider to be informed, on request, whether a swap of the subscriber identity module occurred recently, and/or whether a change of the subscriber identity module occurred recently, and/or whether the generation of an analogous subscriber identity module (Multi-SIM card) occurred recently, and/or whether a change of the user equipment (i.e. the hardware used in connection with the subscriber identity module) occurred recently, and/or whether a change of the type of the user equipment occurred recently, and/or whether a change of the class of the user equipment occurred recently, and/or whether a change of the IMEI occurred recently.

According to still another preferred embodiment of the present invention, a time information corresponds to the indication whether the respective event did occur or did not occur within one of a plurality of preceding time intervals, the time intervals being preferably predefined and referring to the time of either the request message or the answer message.

Thereby, it is advantageously possible according to the present invention that data reduction and data protection is applied as no piece of information regarding the subscriber identity module or regarding the type or class of the user equipment is transmitted but only the time information.

According to a further preferred embodiment of the present invention, the information related to the user equipment and/or related to the subscriber identity module corresponds to at least one out of the following:
-- an amount information related to the number of analogous subscriber identity modules (Multi-SIM cards) used, related to the same MSISDN of the user equipment,
-- an information relating to the type of the subscriber identity module,
-- an information relating to the subscription (or tariff) of the user equipment with the mobile communication network,
-- an information relating to a radio access technology used by the user equipment within the mobile communication network,
-- an information related to which type of an encryption algorithm is used by the user equipment within the mobile communication network,
-- an information related to a visited mobile communication network (VPLMN) of the user equipment,
-- an information related to unique identifiers of mobile data connections or their respective endpoints,
-- an information related to location information such as the distance of analogous subscriber identity modules, related to the same MSISDN of the user equipment.

Thereby, it is advantageously possible according to the present invention that the service provider is informed, on request, about an amount information related to the number of analogous subscriber identity modules (Multi-SIM cards) used, and/or about the type of the subscriber identity module, and/or about the subscription (or tariff) of the user equipment with the mobile communication network, and/or about a radio access technology used by the user equipment within the mobile communication network, and/or about which type of encryption algorithm is used by the user equipment within the mobile communication network, and/or about a visited mobile communication network (VPLMN) of the user equipment, and/or about unique identifiers of mobile data connections or their respective endpoints.

According to another preferred embodiment of the present invention, the user equipment is identified by means of:
-- the MSISDN (Mobile Station Integrated Services Digital Network number) of the user equipment connected with the mobile communication network or
-- an IP-address (Internet Protocol-address) according to IPv6 or
-- an IP-address and an information regarding a point in time of an IP-connection of the user equipment with the mobile communication network.

Thereby, it is advantageously possible still enhance the level of data protection as the MSISDN of the user equipment and/or the IP-address according to IPv6 and/or the IP-address (especially an IPv4 IP-address) and the information regarding a point in time of the IP-connection of the user equipment with the mobile communication network is known to the service provider.

Furthermore, the present invention relates to a system for preventing fraud or misuse based on a risk scoring approach when using a service of a service provider, the system comprising the service provider and a mobile communication network, wherein the service of the service provider is requested by a user equipment, the user equipment being connected to the mobile communication network and the user equipment comprising a subscriber identity module,
wherein a subscriber database is assigned to the mobile communication network, the subscriber database comprising information related to the user equipment and/or related to the subscriber identity module,
wherein for different occurrences of providing the service of the service provider with respect to the user equipment, the user of the user equipment is authenticated by means of transmitting an authentication information between the service provider and the user equipment, wherein for the purpose of the transmission of authentication information between the service provider and the user equipment, the user equipment is identified by means of the MSISDN (Mobile Station Integrated Services Digital Network number) of the user equipment,
wherein the system is configured such that:
-- in connection with a first occurrence of providing the service, a request message is transmitted by the service provider to the subscriber database of the mobile communication network, the request message being related to the MSISDN of the user equipment, and the request message requesting additional data related to the user equipment and/or related to the subscriber identity module,
-- an answer message is transmitted by the subscriber database to the service provider, the answer message comprising the additional data related to the user equipment and/or related to the subscriber identity module,
-- in connection with a second occurrence of providing the service, an authentication information is transmitted between the service provider and the user equipment without transmitting a request message and a corresponding answer message.

By means of such a system, it is advantageously possible that fraud or misuse can be effectively reduced by means of providing an answer message to the service provider.

Especially with respect to the inventive system, it is preferred that the system is configured such that the first occurrence of providing the service, including transmitting the request message and the answer message, is performed in case that - upon requesting the service by the user equipment - a risk scoring threshold of the service provider is exceeded.

Especially with respect to the inventive system, it is preferred that the information related to the user equipment and/or related to the subscriber identity module corresponds to at least one out of the following:
-- a time information related to a swap of the subscriber identity module,
-- a time information related to a change of the subscriber identity module,
-- a time information related to a generation of an analogous subscriber identity module (Multi-SIM card), related to the same MSISDN of the user equipment,
-- a time information related to a change of the user equipment,
-- a time information related to a change of the type of the user equipment,
-- a time information related to a change of the class of the user equipment,
-- a time information related to a change of the IMEI (International Mobile Equipment Identity).

Especially with respect to the inventive system, it is preferred that a time information corresponds to the indication whether the respective event did occur or did not occur within one of a plurality of preceding time intervals, the time intervals being preferably predefined and referring to the time of either the request message or the answer message.

Additionally, the present invention relates to a mobile communication network for preventing fraud or misuse based on a risk scoring approach when using a service of a service provider, wherein the service of the service provider is requested by a user equipment connected to the mobile communication network and the user equipment comprising a subscriber identity module,
wherein a subscriber database is assigned to the mobile communication network, the subscriber database comprising information related to the user equipment and/or related to the subscriber identity module,
wherein for different occurrences of providing the service of the service provider with respect to the user equipment, the user of the user equipment is authenticated by means of transmitting an authentication information between the service provider and the user equipment, wherein for the purpose of the transmission of authentication information between the service provider and the user equipment, the user equipment is identified by means of the MSISDN (Mobile Station Integrated Services Digital Network number) of the user equipment,
wherein the mobile communication network is configured such that:
-- in connection with a first occurrence of providing the service, a request message is transmitted by the service provider to the subscriber database of the mobile communication network, the request message being related to the MSISDN of the user equipment, and the request message requesting additional data related to the user equipment and/or related to the subscriber identity module,
-- an answer message is transmitted by the subscriber database to the service provider, the answer message comprising the additional data related to the user equipment and/or related to the subscriber identity module,
-- in connection with a second occurrence of providing the service, an authentication information is transmitted between the service provider and the user equipment without transmitting a request message and a corresponding answer message.

By means of such a mobile communication network, it is advantageously possible that fraud or misuse can be effectively reduced by means of providing an answer message to the service provider.

Especially with respect to the inventive mobile communication network, it is preferred that the mobile communication network is configured such that the first occurrence of providing the service, including transmitting the request message and the answer message, is performed in case that - upon requesting the service by the user equipment - a risk scoring threshold of the service provider is exceeded.

Especially with respect to the inventive mobile communication network, it is preferred that the information related to the user equipment and/or related to the subscriber identity module corresponds to at least one out of the following:
-- a time information related to a swap of the subscriber identity module,
-- a time information related to a change of the subscriber identity module,
-- a time information related to a generation of an analogous subscriber identity module (Multi-SIM card), related to the same MSISDN of the user equipment,
-- a time information related to a change of the user equipment,
-- a time information related to a change of the type of the user equipment,
-- a time information related to a change of the class of the user equipment,
-- a time information related to a change of the IMEI (International Mobile Equipment Identity).

Especially with respect to the inventive mobile communication network, it is preferred that a time information corresponds to the indication whether the respective event did occur or did not occur within one of a plurality of preceding time intervals, the time intervals being preferably predefined and referring to the time of either the request message or the answer message.

Furthermore, the present invention relates to a program comprising a computer readable program code which, when executed on a computer or on a network node of a mobile communication network or on a network node of a service provider, or in part on a network node of the mobile communication network and in part on a network node of a service provider, causes the computer or the network node of the mobile communication network and/or the network node of the service provider to perform an inventive method.

Still additionally, the present invention relates to computer program product for using a mobile communication network or a system comprising a service provider and a mobile communication network, the computer program product comprising a computer program stored on a storage medium, the computer program comprising program code which, when executed on a computer or on a network node of a mobile communication network or on a network node of a service provider, or in part on a network node of the mobile communication network and in part on a network node of a service provider, causes the computer or the network node of the mobile communication network and/or the network node of the service provider to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

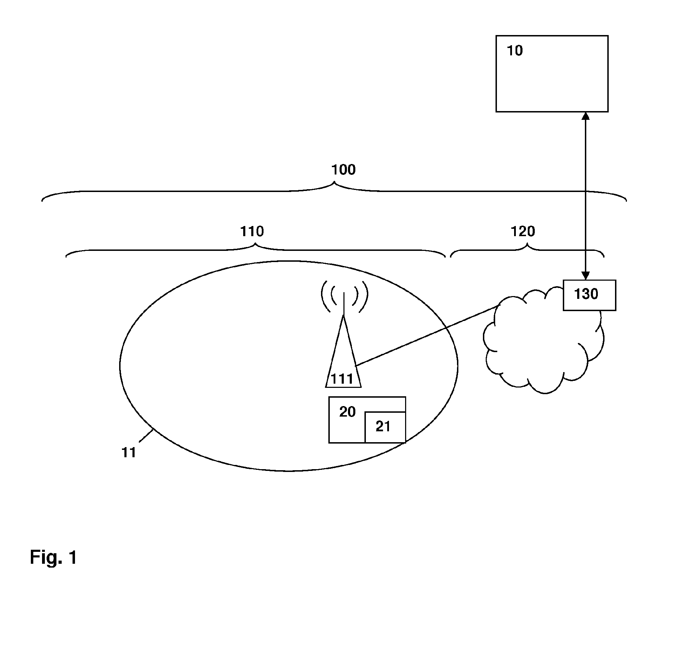

Figure 1 schematically illustrates an exemplary situation according to the present invention where a mobile communication network-with a user equipment connected to the mobile communication network- is connected to a service provider, and the service provider is able to exchange pieces of information with a subscriber database of the mobile communication network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, especially a public land mobile network 100, is schematically shown, the mobile communication network 100 comprising an access network 110 and a core network 120. The mobile communication network 100 is preferably a cellular telecommunications network comprising typically a plurality of network cells (or radio cells), one of which is represented in Figure 1 by means of a drawn-through circular line and reference sign 11. Typically, a base station entity 111 (or eNodeB or enhanced NodeB) is assigned to each network cell 11, the base station entity 111 being part of the access network 110 of the mobile communication network 100. In the mobile communication network 100, typically a plurality of user equipments are camping on the mobile communication network 100. Representative for the plurality of user equipments within the network cell (or radio cell) 11, a user equipment 20 is schematically shown.

The mobile communication network 100 comprises a subscriber database 130 and the mobile communication network 100 (and especially the subscriber database 130 is in contact with (or connected to) a service provider 10. By means of the connection between the service provider 10 and the mobile communication network 100, especially the subscriber database 10 of the mobile communication network 100, the additional data related to the user equipment 20 and/or related to the subscriber identity module can be transferred to the service provider in case that the service provider requests such additional data (which is only the case in connection with the first occurrence of providing the service, not in connection with the second occurrence of providing the service.

According to the present invention, the mobile network operator transmits auxiliary information (i.e. additional data) related to a subscriber, i.e. to the user equipment 20, to the service provider, i.e. a partner, such as, e.g., a bank, a payment provider, a game provider or to another third party. This additional data may comprise:
-- data of the device (or user equipment used) such as
   -- the unique identifier of the SIM card used (e.g. MSISDN (Mobile Subscriber ISDN (integrated services digital network) number), or the IMSI (International Mobile subscriber identity),
   -- data related to the mobile (e.g. the IMEI (International Mobile Equipment identity),
   -- information about SIM type (SIM card platform, form factor, embedded SIM, specific IMSI classes or categories),
-- subscription data such as
   -- tariff information (e.g. pre-paid vs. post-paid)
   -- configuration of embedded SIMs, e.g. what MNO is currently provided?
   -- booking of tariff options
   -- customer's credit-worthiness class
-- network-related data
   -- network generation (2G / 3G / 4G, the term 2G referring to second generation mobile radio networks (e.g. GSM), the term 3G referring to third generation mobile radio networks (such as UMTS), the term 4G referring to fourth generation mobile radio networks (such as LTE)) and other parameters like the encryption algorithm (A5/1 vs. A5/3, corresponding to modes of GSM encryption algorithm A5 which provide different cryptographic strength) used of the current mobile connection of the user equipment,
   -- visited network (VPMN identifier)
-- usage data such as
   -- unique identifiers of mobile data connections or their endpoints (e.g. IP addresses, dynamic DNS (domain name system) information),
   -- additional information like location information (e.g. cell tower data, or geographical distance between two Multi-SIM cards - if cards are usually close to each other, higher distance can be an indication of a stolen SIM card),
   -- information about set-up of call forwarding (national or international), or forwarding of messaging services (such as SMS, or e-mail, or instant messaging), or calling line identity restriction (CLIR),
   -- special interaction with customer care, such as: ordering of multi-SIMs,
   replacement SIMs
   -- information about what mobile device is currently in use.

According to the present invention, all these data can be combined with timestamps. Taken together these data and these timestamps provide information such as:
-- the validity period of the subscriber identity module: When did the last SIM swap take place (when was the last time the IMSI has changed) or did the last SIM swap/the last time the IMSI has changed occur in the last 5 days? This additional information provides an indication of fraud scenarios (e.g. a fraudster has ordered a multi-SIM card, or requested an exchange SIM card, in order to intercept mobile TAN);
-- When was the last time the customer changed his/her mobile device?
-- Is call forwarding set up, and if, since when?

According to the present invention, potential use cases include but are not restricted to:
-- risk scoring / fraud detection,
-- location based services,
-- location tracking / location sharing,
for service providers or partner companies (e. g. in the banking or transportation sector) or even law enforcement.

All this information can be used as input for value-added services and other services (e.g. like fraud risk scoring / fraud detection systems).

The transmission of any such customer-related data, which may constitute personally identifiable information, requires either an appropriate legal foundation or some form of user consent, either implicit or explicit.

According to the present invention, it is preferred that, the additional information which is transmitted to the service provider or a third party is consolidated prior to its transmission in such a way such that only the necessary information is passed on to the service provider or third party. This includes, e.g.,
-- the raw data can be pre-processed according to certain rule sets,
-- they can be combined by logical (Boolean expressions, like AND, OR, NOT)
-- arithmetical calculations (computing an average, minimum, maximum, difference, etc.) can be performed, or
-- the service provider or partner may define the pre-processing operations in the form of a program (code written in a programming language) or a so-called script.

Only the consolidated data, which are the result of the computation, are then transmitted to the service provider 10 or partner. This takes care of concepts like appropriation (data is only used for a well-defined purpose), data reduction and data economy (only the data needed is collected and transmitted).

For example, in order to detect a SIM swap, the IMSI (which constitutes personally identifiable information) does not have to be passed on to the third party. Instead, only the timestamp of the last IMSI change (and thus SIM card change) has to be transmitted. Depending on the scenario, only coarse information like "SIM card did not change within the last 3 months" or to transmit finer-grained information like "last SIM card swap took place 234 days ago" is transmitted.

## Claims

1. Method for preventing fraud or misuse based on a risk scoring approach when using a service of a service provider (10), wherein the service of the service provider (10) is requested by a user equipment (20), the user equipment (20) being connected to a mobile communication network (100) and the user equipment (20) comprising a subscriber identity module (21),
wherein a subscriber database (130) is assigned to the mobile communication network (100), the subscriber database (130) comprising information related to the user equipment (20) and/or related to the subscriber identity module (21), wherein for different occurrences of providing the service of the service provider (10) with respect to the user equipment (20), the user of the user equipment (10) is authenticated by means of transmitting an authentication information between the service provider (10) and the user equipment (20), wherein for the purpose of the transmission of authentication information between the service provider (10) and the user equipment (20), the user equipment (20) is identified by means of the MSISDN (Mobile Station Integrated Services Digital Network number) of the user equipment (20),
wherein the method comprises the following steps:
-- in connection with a first occurrence of providing the service, the service provider (10) transmits, in a first step, a request message to the subscriber database (130) of the mobile communication network (100), the request message being related to the MSISDN of the user equipment (20), and the request message requesting additional data related to the user equipment (20) and/or related to the subscriber identity module (21),
-- the subscriber database (130) transmits, in a second step, subsequent to the first step, an answer message to the service provider (10), the answer message comprising the additional data related to the user equipment (20) and/or related to the subscriber identity module (21),
-- in connection with a second occurrence of providing the service, the second occurrence of providing the service being either prior or subsequent to the first occurrence of providing the service, an authentication information is transmitted between the service provider (10) and the user equipment (20) without transmitting a request message and a corresponding answer message.

2. Method according to claim 1, wherein the first occurrence of providing the service, including transmitting the request message and the answer message, is performed in case that - upon requesting the service by the user equipment (20) - a risk scoring threshold of the service provider (10) is exceeded.

3. Method according to one of the preceding claims, wherein the information related to the user equipment (20) and/or related to the subscriber identity module (21) corresponds to at least one out of the following:
-- a time information related to a swap of the subscriber identity module (21),
-- a time information related to a change of the subscriber identity module (21),
-- a time information related to a generation of an analogous subscriber identity module (21) (Multi-SIM card), related to the same MSISDN of the user equipment (20),
-- a time information related to a change of the user equipment (20),
-- a time information related to a change of the type of the user equipment (20),
-- a time information related to a change of the class of the user equipment (20),
-- a time information related to a change of the IMEI (International Mobile Equipment Identity).

4. Method according to one of the preceding claims, wherein a time information corresponds to the indication whether the respective event did occur or did not occur within one of a plurality of preceding time intervals, the time intervals being preferably predefined and referring to the time of either the request message or the answer message.

5. Method according to one of the preceding claims, wherein the information related to the user equipment (20) and/or related to the subscriber identity module (21) corresponds to at least one out of the following:
-- an amount information related to the number of analogous subscriber identity modules (21) (Multi-SIM cards) used, related to the same MSISDN of the user equipment (20),
-- an information relating to the type of the subscriber identity module (21),
-- an information relating to the subscription (or tariff) of the user equipment (20) with the mobile communication network (100),
-- an information relating to a radio access technology used by the user equipment (20) within the mobile communication network (100),
-- an information related to which type of an encryption algorithm is used by the user equipment (20) within the mobile communication network (100),
-- an information related to a visited mobile communication network (VPLMN) of the user equipment (20),
-- an information related to unique identifiers of mobile data connections or their respective endpoints,
-- an information related to location information such as the distance of analogous subscriber identity modules (21), related to the same MSISDN of the user equipment (20).

6. Method according to one of the preceding claims, wherein the user equipment (20) is identified by means of:
-- the MSISDN (Mobile Station Integrated Services Digital Network number) of the user equipment (20) connected with the mobile communication network (100) or
-- an IP-address (Internet Protocol-address) according to IPv6 or
-- an IP-address and an information regarding a point in time of an IP-connection of the user equipment (20) with the mobile communication network (100).

7. System for preventing fraud or misuse based on a risk scoring approach when using a service of a service provider (10), the system comprising the service provider (10) and a mobile communication network (100), wherein the service of the service provider (10) is requested by a user equipment (20), the user equipment (20) being connected to the mobile communication network (100) and the user equipment (20) comprising a subscriber identity module (21), wherein a subscriber database (130) is assigned to the mobile communication network (100), the subscriber database (130) comprising information related to the user equipment (20) and/or related to the subscriber identity module (21), wherein for different occurrences of providing the service of the service provider (10) with respect to the user equipment (20), the user of the user equipment (10) is authenticated by means of transmitting an authentication information between the service provider (10) and the user equipment (20), wherein for the purpose of the transmission of authentication information between the service provider (10) and the user equipment (20), the user equipment (20) is identified by means of the MSISDN (Mobile Station Integrated Services Digital Network number) of the user equipment (20),
wherein the system is configured such that:
-- in connection with a first occurrence of providing the service, a request message is transmitted by the service provider (10) to the subscriber database (130) of the mobile communication network (100), the request message being related to the MSISDN of the user equipment (20), and the request message requesting additional data related to the user equipment (20) and/or related to the subscriber identity module (21),
-- an answer message is transmitted by the subscriber database (130) to the service provider (10), the answer message comprising the additional data related to the user equipment (20) and/or related to the subscriber identity module (21),
-- in connection with a second occurrence of providing the service, an authentication information is transmitted between the service provider (10) and the user equipment (20) without transmitting a request message and a corresponding answer message.

8. System according to claim 7, wherein the system is configured such that the first occurrence of providing the service, including transmitting the request message and the answer message, is performed in case that - upon requesting the service by the user equipment (20) - a risk scoring threshold of the service provider (10) is exceeded.

9. System according to one of claims 7 or 8, wherein the information related to the user equipment (20) and/or related to the subscriber identity module (21) corresponds to at least one out of the following:
-- a time information related to a swap of the subscriber identity module (21),
-- a time information related to a change of the subscriber identity module (21),
-- a time information related to a generation of an analogous subscriber identity module (21) (Multi-SIM card), related to the same MSISDN of the user equipment (20),
-- a time information related to a change of the user equipment (20),
-- a time information related to a change of the type of the user equipment (20),
-- a time information related to a change of the class of the user equipment (20),
-- a time information related to a change of the IMEI (International Mobile Equipment Identity).

10. System according to one of claims 7, 8 or 9, wherein a time information corresponds to the indication whether the respective event did occur or did not occur within one of a plurality of preceding time intervals, the time intervals being preferably predefined and referring to the time of either the request message or the answer message.

11. Mobile communication network (100) for preventing fraud or misuse based on a risk scoring approach when using a service of a service provider (10), wherein the service of the service provider (10) is requested by a user equipment (20) connected to the mobile communication network (100) and the user equipment (20) comprising a subscriber identity module (21),
wherein a subscriber database (130) is assigned to the mobile communication network (100), the subscriber database (130) comprising information related to the user equipment (20) and/or related to the subscriber identity module (21), wherein for different occurrences of providing the service of the service provider (10) with respect to the user equipment (20), the user of the user equipment (10) is authenticated by means of transmitting an authentication information between the service provider (10) and the user equipment (20), wherein for the purpose of the transmission of authentication information between the service provider (10) and the user equipment (20), the user equipment (20) is identified by means of the MSISDN (Mobile Station Integrated Services Digital Network number) of the user equipment (20),
wherein the mobile communication network (100) is configured such that:
-- in connection with a first occurrence of providing the service, a request message is transmitted by the service provider (10) to the subscriber database (130) of the mobile communication network (100), the request message being related to the MSISDN of the user equipment (20), and the request message requesting additional data related to the user equipment (20) and/or related to the subscriber identity module (21),
-- an answer message is transmitted by the subscriber database (130) to the service provider (10), the answer message comprising the additional data related to the user equipment (20) and/or related to the subscriber identity module (21),
-- in connection with a second occurrence of providing the service, an authentication information is transmitted between the service provider (10) and the user equipment (20) without transmitting a request message and a corresponding answer message.

12. Program comprising a computer readable program code which, when executed on a computer or on a network node of a mobile communication network (100) or on a network node of a service provider (10), or in part on a network node of the mobile communication network (100) and in part on a network node of a service provider (10), causes the computer or the network node of the mobile communication network (100) and/or the network node of the service provider (10) to perform a method according one of claims 1 to 6.

13. Computer program product for using a mobile communication network (100) or a system comprising a service provider (10) and a mobile communication network (100), the computer program product comprising a computer program stored on a storage medium, the computer program comprising program code which, when executed on a computer or on a network node of a mobile communication network (100) or on a network node of a service provider (10), or in part on a network node of the mobile communication network (100) and in part on a network node of a service provider (10), causes the computer or the network node of the mobile communication network (100) and/or the network node of the service provider (10) to perform a method according one of claims 1 to 6.
